# EUROPEAN PATENT SPECIFICATION

(11) **EP 1 629 634 B1**
(45) Date of publication and mention of the grant of the patent: **15.08.2007**
(21) Application number: 04736002.9
(22) Date of filing: 03.06.2004
(51) Int. Cl.: H04L 12/28

(54) **SECURE AUTHENTICATION IN A WIRELESS HOME NETWORK**
SICHERE AUTHENTIFIZIERUNG IN EINEM DRAHTLOSEN HAUSNETZWERK
AUTHENTIFICATION SECURISEE DANS UN RESEAU DOMESTIQUE SANS FIL

(30) Priority: 04.06.2003 JP 2003159989
(43) Date of publication of application: 01.03.2006
(73) Proprietor: MATSUSHITA ELECTRIC INDUSTRIAL CO., LTD, Kadoma-shi, Osaka 571-8501 (JP)
(72) Inventor: MORIOKA, Masaaki, Hiroshima 739-0024 (JP); NASU, Hidetada, Hiroshima 739-0025 (JP); SUGIMOTO, Kuniaki, Hiroshima 736-0083 (JP)
(74) Representative: Grünecker, Kinkeldey, Stockmair & Schwanhäusser Anwaltssozietät
(86) International application number: PCT/JP2004/008056
(87) International publication number: WO 2004/109982

(56) References cited:
- US-A1- 2003 013 440
- STEPHEN R. HANNA, SUN MICROSYSTEMS, INC.: "Configuring Security Parameters in Small Devices" INTERNET DRAFT, 1 January 2002 (2002-01-01), pages 1-11, XP015001114
- MOULY M ET AL: "MOBILITY AND SECURITY MANAGEMENT" GSM SYSTEM FOR MOBILE COMMUNICATIONS, LASSAY-LES-CHATEAUX, EUROPE MEDIA, FR, 1993, pages 432-498, XP000860007
- LEONG S S ET AL: "DESIGN AND IMPLEMENTATION OF AN AUTHENTICATION PROTOCOL FOR HOME AUTOMATION SYSTEMS" IEEE TRANSACTIONS ON CONSUMER ELECTRONICS, IEEE INC. NEW YORK, US, vol. 44, no. 3, August 1998 (1998-08), pages 911-921, XP000851599 ISSN: 0098-3063

## Description

### Technical Field

The present invention relates to a wireless network, and especially to a technique for having each node in the wireless network hold initial data used in authentication between nodes.

### Background Art

In recent years, home networks that enable household electrical devices to perform data communication so as to work together have been attracting public attention. In a home network, as in a corporate network, registration of a new device necessarily occurs. The new device is registered to the home network to be able to communicate with other node devices in the network, in such a manner that information relating to a key that a management device is held by the new device hold and mutual authentication is performed between the new device and management device.

In a home network, it is assumed that a common key encryption method is generally used authentication between devices and for protection of data in communication. Inputting a common key or a password for generating the common key of the management device for the mutual authentication into the new device has been carried out manually.

However, manually inputting initial data such as the common key and the password is not easy for many household electrical devices without an input device like a keyboard. Further, inputting becomes even more difficult with cases of household electrical devices such as an air-conditioner that is usually positioned near the ceiling.

Although the manual input is not easy, it is not desirable to transmit the initial data from the management device to the new device using a low-power radiowave channel that is used for data transmission within the home network, because a third party could intercept information transmitted using the low-power radiowave channel. In a case such an interception happens and the initial information is obtained by the third party without authorization, a risk may arise that an authorized user suffers heavily from an illegal device that pretends to be legal.

US 2003/013440 A1 discloses a technology of providing a portable telephone used for home use with a short-range wireless function (wireless LAN) thereby having a telephone number of a portable telephone to be shared between a master communication device and a plurality of slave communication devices. In the cited reference of US2003/013440, when a control delegation reason to any slave communication device occurs, a control delegation signal for permitting the transmission/reception means of that slave communication device to be turned on is transmitted from the master communication device to that slave communication device through the respective short-range wireless communication means to perform switching.

STEPHEN R. HANNA, SUN MICROSYSTEMS, INC.: "Configuring Security Parameters in Small Devices" INTERNET DRAFT, 1 January 2002 (2002-01-01), pages 1-11, XP015001114 discloses a technology of performing, to a network used in normal communication, important communication from a security point of view (e.g. apparatus registration), by using a securer network than is used in the normal communication. This reference discloses, as securer networks, dedicated wire such as USB, a proximity network such as infrared radiation and Bluetooth, and a power line communication.

### Disclosure of the Invention

An object of the present invention is to provide a management device, a communication device, an intermediate device, a method of registration of the communication device, a program to control the communication device, and an LSI that enable devices that are positioned at remote locations to share the initial data easily with maintaining a high secrecy level of the initial data that is used in registration of devices to a wireless network.

In order to achieve the above object, a management device according to the present invention is a management device that registers a communication device to a wireless network in which data communication is performed, the management device comprising: a transmission unit operable to, in registering the communication device, transmit on a predetermined carrier a piece of initial data for authentication to an intermediate device, which relays the piece of initial data to the communication device; an authentication unit operable to authenticate the communication device that has received the piece of initial data from the intermediate device, using data identical to the piece of initial data; and a communication unit operable to perform data communication with the authenticated communication device via the wireless network, wherein: an area where the predetermined carrier reaches is narrower in comparison with any carrier for the wireless network.

With the above structure, the leakage of the initial data is prevented, even if an unauthorized person intercepts communication in the wireless network, because the predetermined carrier on which the initial data is transmitted is different from the carrier used for the wireless network. Further, the transmission on the predetermined carrier makes it more difficult for the unauthorized person to intercept the initial data, because the area where the predetermined carrier reaches is narrower than the area where the carrier used for the wireless communication reaches. In addition, the initial data is transmitted to the intermediate device from the management, and then to the communication device from the intermediate device, even when registering a communication device positioned at a location where the communication device is able to communicate with the management device when using the carrier for the wireless network but not when using the predetermined carrier because of a difference in the areas which the carriers reach.

Therefore, the initial data may be easily shared between the management device and communication device with maintaining the secrecy of the initial data, even when the management device and communication device are disposed at distant locations from each other.

The management device according to the present invention may also be such that the predetermined carrier is infrared light.

With the above structure, the secrecy level of the communication on the predetermined carrier becomes higher due to a high directivity of the infrared light. The initial data is received only at a location that is in a direction toward which the intermediate device transmits an infrared signal, and where no shielding exists between the management device.

Therefore, it is difficult to intercept the initial data, from outside, that is transmitted from the management device that is positioned in a house, and the leakage of the initial data other than a physical intrusion into the house is considerably reduced.

The management device according to the present invention may also be such that the predetermined carrier is a close-range radiowave of a contactless IC card.

A range of communication using the IC card is such that 3 mm or less with the contactless close-coupled card, 20 cm or less with the contactless proximity card, and 100 cm or less with the contactless vicinity card. Thus, it is difficult for the third party outside the range to intercept the communication.

Therefore, it is difficult to intercept the initial data, from outside, that is transmitted from the management device that is positioned in a house, and the leakage of the initial data other than a physical intrusion into the house is considerably reduced.

The management device according to the present invention may also be such that the piece of initial data contains a device address of the management device.

With the above structure, the device address of the management device is transmitted to the communication device using the predetermined carrier, and therefore it is not necessary that the communication device attempts to discover a device to which the communication device may connect via the wireless network to specify the device address of the management device.

Therefore; an amount of data transmitted via the wireless network decreases, and a risk that the malicious third party obtains the transmitted data is reduced.

In order to achieve the above object, a management device according to the present invention may also be a management device that registers a communication device to a wireless network in which data communication is performed, the management device comprising: a readout unit operable to, in registering a communication device to the wireless network, read from a recording medium a piece of initial data for authentication; an authentication unit operable to authenticate the communication device using the piece of initial data; and a communication unit operable to perform data communication with the authenticated communication device via the wireless network.

With the above structure, the management device and communication device share the initial data easily with maintaining the secrecy of the initial data, even when the communication device to be registered is able to communicate only in the wireless network, by reading the initial data out of the recording medium in which the initial data is recorded.

In order to achieve the above object, a communication device according to the present invention is a communication device comprising: a receiving unit operable to, when being registered to a wireless network managed by a management device, receive on a predetermined carrier a piece of initial data for authentication from a intermediate device, which holds the piece of initial data received from the management device; an authentication request unit operable to, based on the piece of initial data, request an authentication from the management device; and a communication unit operable to, when the authentication is successful, perform data communication with other registered communication devices via the wireless network, wherein: an area where the predetermined carrier reaches is narrower in comparison with any carrier for the wireless network.

With the above structure, the leakage of the initial data is prevented, even if an unauthorized person intercepts communication in the wireless network, because the initial data is transmitted on the predetermined carrier. Further, the transmission on the predetermined carrier makes it more difficult for the unauthorized person to intercept the initial data, because the area where the predetermined carrier reaches is narrower than the area where the carrier used for the wireless communication reaches. In addition, the communication device receives the initial data, even when it is not possible to directly communicate with the management device using the predetermined carrier, because the initial data is transmitted to the communication device via the intermediate device.

Therefore, the initial data is easily shared between the management device and communication device with maintaining the secrecy of the initial data, even when the management device and communication device are disposed at distant locations from each other.

The communication device according to the present invention also may be such that the piece of initial data contains one of a common key and a password for generating the common key, the common key being held by the management device; and the authentication request unit request an authentication in a challenge-and-response method using the common key.

With the above structure, the communication device is able to generate, upon authentication, a different response data from the initial data that has been received before the authentication, using the password and challenge data that is the random number. Therefore, it is possible to increase the security against the malicious third party trying to pretend to be a legal device.

The communication device according to the present invention also may further comprises an encryption/decryption unit operable to encrypt data to be sent and decrypt data received by the communication unit, the encryption and decryption being performed based on a common key encryption method using the common key.

With the above structure, the managing device and communication device are able to encrypt/decrypt the data using the common key with maintaining the secrecy.

Therefore, it is possible to perform data transmission safely, avoiding interception of the data.

The communication device according to the present invention also may be such that the piece of initial data contains a device address of the management device; and the authentication request unit requests an authentication from a device identified by the device address.

With the above structure, the communication device obtains the device address of the management device using the predetermined carrier, and therefore it is not necessary to attempt to discover a device to which the communication device may connect via the wireless network to specify the device address of the management device.

Therefore, an amount of data transmitted via the wireless network decreases, and a risk that the malicious third party obtains the transmitted data is reduced.

The communication device according to the present invention also may be such that the predetermined carrier is infrared light.

With the above structure, the secrecy level of the communication on the predetermined carrier becomes higher due to a high directivity of the infrared light. The initial data is received only at a location that is in a direction toward which the intermediate device transmits an infrared signal, and where no shielding exists between the intermediate device.

Therefore, it is difficult to intercept the initial data, from outside, that is transmitted to the communication device disposed in a house, and the leakage of the initial data other than a physical intrusion into the house is considerably reduced.

The communication device according to the present invention also may be such that the predetermined carrier is a close-range radiowave of a contactless IC card.

A communication range of the IC card is such that a distance of 3 mm or less with the contactless close-coupled card, 20 cm or less with the contactless proximity card, and 100 cm or less with the contactless vicinity card. It is difficult to intercept the communication outside the range.

Therefore, it is difficult to intercept the initial data, from outside, that is transmitted to the communication device that is positioned in a house, and the leakage of the initial data other than a physical intrusion into the house may be considerably reduced.

In order to achieve the above object, a communication device according to the present invention is a communication device comprising: a holding unit operable to hold a piece of initial data for authentication by a management device in a wireless network, the management device obtaining data that is recorded in a recording medium and identical with the piece of initial data; an authentication request unit operable to, based on the held data, request an authentication from the management device; and a communication unit operable to, when the authentication is successful, perform data communication via the wireless network with other registered communication devices.

With the above structure, the leakage of the initial data is prevented, even if an unauthorized person intercepts communication in the wireless network, because the initial data is shared between the management device and communication device without transmitting via the wireless network.

In order to achieve the above object, an intermediate device according to the present invention is an intermediate device comprising: a receiving unit operable to, in registration of a communication device to a wireless network, receive on a predetermined carrier a piece of initial data from a management device; a holding unit operable to hold the piece of initial data; and a sending unit operable to send the piece of initial data to the communication device, using the predetermined carrier, wherein: an area where the predetermined carrier reaches is narrower in comparison with any carrier for the wireless network.

With the above structure, the leakage of the initial data is prevented if the intermediate device transmits the initial data on the predetermined carrier, even if an unauthorized person intercepts communication in the wireless network.

The intermediate device according to the present invention also may be such that different carriers are used in the receiving and the sending of the piece of initial data.

With the above structure, even when the management device uses, in communication, a different carrier from a carrier used by the communication device, the management device and communication device share the initial data easily because the initial data is transmitted via the intermediate device.

The intermediate device according to the present invention also may further comprises an erase unit operable to erase the piece of initial data held in the holding unit.

With the above structure, the initial data held in the holding unit is not left in the holding unit after the intermediate device transmitted the initial data, by erasing the initial data by the erasing unit.

Therefore, the leakage of the initial data after the communication device is registered to the wireless network is prevented, even when the intermediate device is stolen.

The intermediate device according to the present invention also may be such that the erase of the piece of initial data is performed when the piece of sent initial data is received by the communication device.

With the above structure, the initial data is transmitted again from the intermediate device without erasing the initial data in the holding unit, when the reception of the initial data by the communication device fails.

Therefore, it is not necessary to receive the initial data from the management device every time the communication device fails to receive the initial data in transmission of the initial data.

The intermediate device according to the present invention also may be such that the erase unit confirms, by receiving a notification from the communication device, that the piece of initial data is received by the communication device.

With the above structure, the intermediate device erases the initial data after confirming that the initial data is received by the communication device.

The intermediate device according to the present invention also may be such that the holding unit is a Ferroelectric Random Access Memory; and the erasing of the piece of initial data is performed by destructive read of the piece of initial data.

With the above structure, the initial data in the holding unit is easily erased.

The intermediate device according to the present invention also may be a handheld type and movable from a first location to a second location, and such that the receiving unit receives the piece of initial data at the first location, from which the predetermined carrier reaches the management device; and the sending unit sends the piece of initial data at the second location, from which the predetermined carrier reaches the communication device.

With the above structure, the management device and communication device share the initial data easily, by carrying the intermediate device from the first location to the second location so as to communicate with each device at each location, even when the management device and communication device are positioned at locations where the management device and communication device are not able to communicate directly using the predetermined carrier.

### Brief Description Of The Drawings

FIG. 1 illustrates a use of the registration system according to the present invention.
FIG.2 illustrates a constitution of each device according to a first embodiment.
FIG.3 illustrates a data structure of initial data.
FIG.4 illustrates a sequence of communication between devices in the first embodiment.
FIG.5 illustrates a constitution of an intermediate device according to a modified example of the first embodiment.
FIG. 6 illustrates a use of the registration system according to a second embodiment.
FIG.7 illustrates a constitution of each device according to the second embodiment.
FIG.8 illustrates a sequence of communication between devices in the second embodiment.

### Best Mode for Carrying Out the Invention

The following describes preferred embodiments of the present invention with reference to the drawings.

### [First Embodiment]

A registration system according to a first embodiment is utilized when registering a new household electrical device to a home network in which a plurality of household electrical devices each having a communication device built-in are connected via low-power radiowaves.

### 1. Practical Use

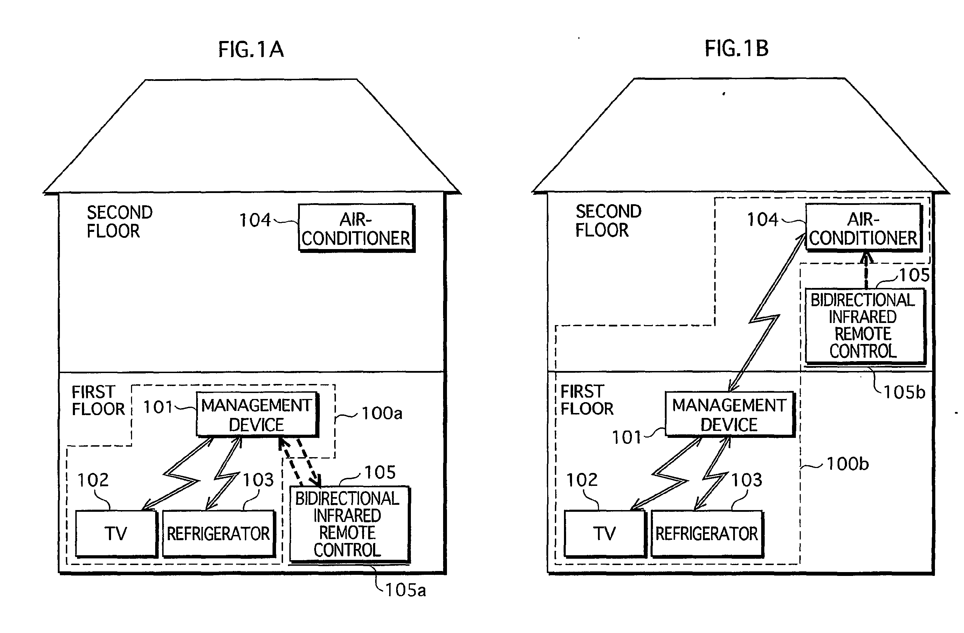

FIG.1 illustrates a use of the registration system according to the present invention. An outline of the present invention is explained taking an example of a case in which an air-conditioner 104 having a communication device built-in is newly registered to a home network 100a. In order to register the air-conditioner 104 to the home network 100a, it is necessary to perform a mutual authentication between a management device 101 and the air-conditioner 104 using a common key shared by both the management device 101 and the air-conditioner 104. In the present embodiment, the air-conditioner 104 obtains initial data containing a number (hereinafter referred to as a password) used in a calculation to generate a common key held by the management device 101 and a device address of the management device 101. By this, the common key is shared by the air-conditioner 104 and the management device 101 to be mutually authenticated.

The home network 100a according to the present embodiment is a star-topology network having household electrical devices authorized by the management device 101 as nodes. Data transmission between nodes is performed via the management device 101. A household electrical device registered to the home network 100a obtains operational states of other devices in the network through the data transmission, and performs an operation according to the obtained operational states. In the FIG. 1A, the home network 100a forms a star-topology network with the management device 101 as a center of the star, and a TV 102, a refrigerator 103 as nodes.

The management device 101, disposed on an upper part of a wall on the first floor in a house, controls registration of a device to the home network 100a, and serves as a base station of the home network 100a to relay the data transmission between nodes. The management device 101 has a low-power radio communication function for the data transmission in the home network 100a as well as an IrDA infrared data communication function. The TV 102 and refrigerator 103 are household electrical devices disposed on a floor of the first floor, and also have a low-power radio communication function, in addition to their respective intended functions. The TV 102 and refrigerator 103 each hold a key shared between the management device 101, and are already registered as a node in the home network 100a by authenticated mutually with the management device 101 using the common key.

A bidirectional infrared remote control 105 is a potable intermediate device having an IrDA infrared data communication function. The bidirectional infrared remote control 105 includes a registration button and a transmission button on its casing, and transmits a request for the initial data using the infrared data communication, when the registration button is pressed. The bidirectional infrared remote control 105 records the initial data when the initial data is received using the infrared data communication. When the transmission button is pressed, the bidirectional infrared remote control 105 transmits the recorded initial data using the infrared data communication.

The infrared data communication function of the bidirectional infrared remote control 105 is such that a distance of communication is within one meter, and a directional width is within 15 degrees from the center. The bidirectional infrared remote control 105 is able to perform the data transmission with other devices having an infrared data communication function and located within the area described above in terms with the location of the bidirectional infrared remote control 105. For example, when the bidirectional infrared remote control 105 is at a location 105 a in FIG. 1A, an infrared communication between the bidirectional infrared remote control 105 and the management device 101 is possible by operating the bidirectional infrared remote control 105 with a light emitting/sensitive unit of the bidirectional infrared remote control 105 facing the management device 101, because there is no shielding between the management device 101 and the bidirectional infrared remote control 105. When the bidirectional infrared remote control 105 is at a location 105b in FIG. 1B, there is no shielding between the bidirectional infrared remote control 105 and the air-conditioner 104, and accordingly, an infrared communication between the bidirectional infrared remote control 105 and the air-conditioner 104 is possible by operating the bidirectional infrared remote control 105 with a light emitting/sensitive unit of the bidirectional infrared remote control 105 facing the air-conditioner 104.

When a user newly purchased the air-conditioner 104 and placed it on an upper part of a wall on the second floor, the air-conditioner 104 is not registered to the home network 100a in FIG.1A, and may be registered to the home network 100a in a manner explained below.

The air-conditioner 104 has a low-power radio communication function and an IrDA infrared data communication function. A shielding exists between the air-conditioner 104 and the management device 101, because the air-conditioner 104 is placed on a different floor from the floor on which the management device 101 is placed. Accordingly, it is not possible to perform a direct infrared data communication between the air-conditioner 104 and the management device 101.

The user operates the bidirectional infrared remote control 105 at the location 105a on the first floor, as shown in FIG.1A, to receive the initial data from the management device 101 using the infrared communication, and record the received initial data in the bidirectional infrared remote control 105. Then the user moves to the location 105b on the second floor as shown in FIG. 1B, and operates the bidirectional infrared remote control 105 to transmit the initial data to the air-conditioner 104 using the infrared communication.

With the above described operations, the air-conditioner 104 obtains the initial data. Then, the air-conditioner 104 performs a mutual authentication between the management device 101 using a password and the device address contained in the initial data to be registered as a node in the home network 100b as shown in FIG.1B.

### 2. Structures of Devices

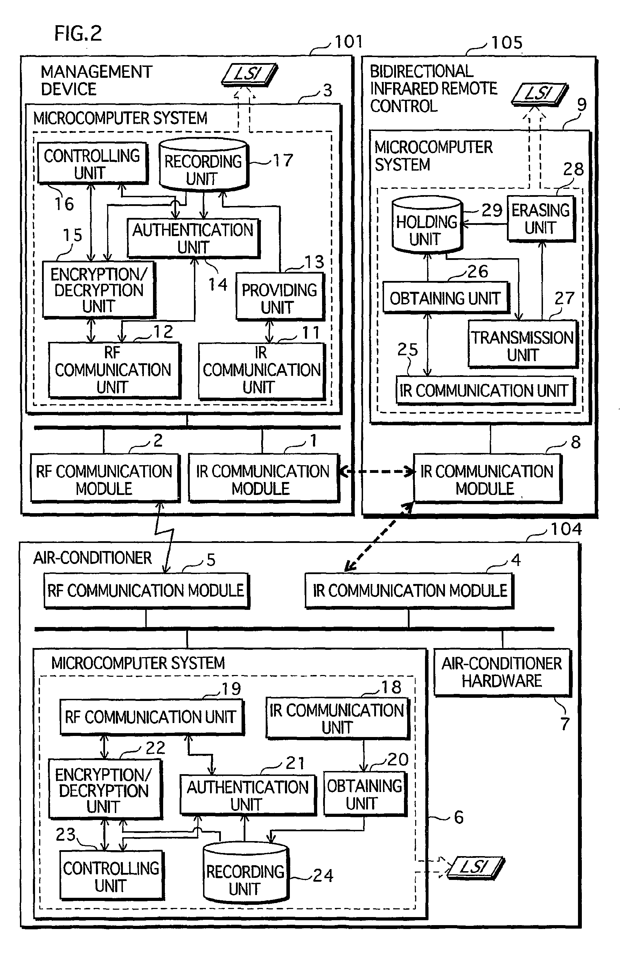

The following explains structures of devices according to the present embodiment. FIG. 2 illustrates a constitution of each device according to the first embodiment.

Themanagement device 101 includes an IR communication module 1, an RF communication module 2, and a microcomputer system 3, and structured by connecting these components via bus.

The IR communication module 1 includes an light emitting unit having an infrared LED and a light sensitive unit having a photodiode, and sends and receives an infrared signal.

The RF communication module 2 includes a modulation/demodulation circuit, a frequency conversion circuit, and a high-frequency circuit, and sends and receives a radio signal.

The microcomputer system 3 is a computer system made of a CPU, a ROM, a RAM, and an EEPROM. The management device 101 realizes its function by the CPU reading a program stored in the ROM, and by the program and hardware resources working together.

An IR communication unit 11, an RF communication unit 12, a providing unit 13, an authentication unit 14, an encryption/decryption unit 15, a controlling unit 16, and recording unit 17 are functional blocks that are realized by the program and hardware resources working together in the microcomputer system 3.

The IR communication unit 11 controls an operation of the IR communication module 1 according to the IrDA protocol, and realizes the data transmission and reception using the infrared communication.

The RF communication unit 12 controls an operation of the RF communication module 2, and realizes the data transmission and reception using the low-power radiowave communication.

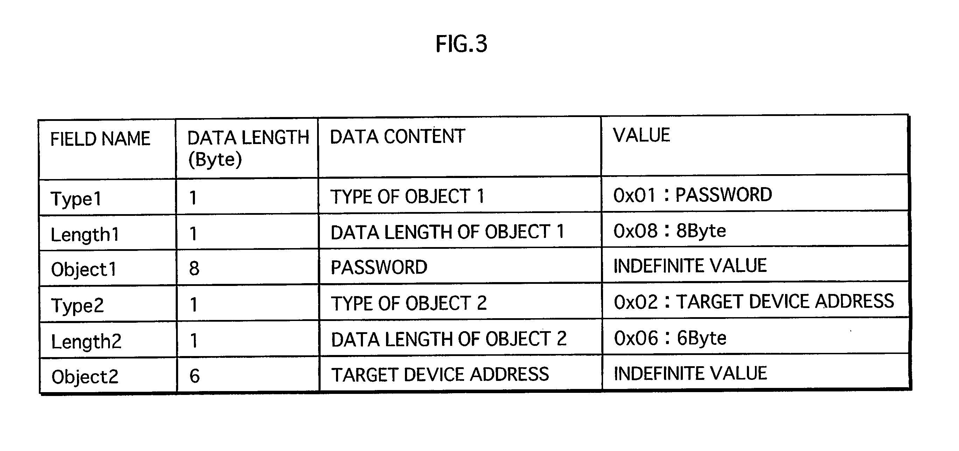

The providing unit 13 controls an operation of providing the initial data. The operation of providing the initial data is such that an 8-byte random number which is to be a password is generated when the request for the initial data is received at the IR communication unit 11, the initial data in a format as shown in FIG. 3 is generated based on the password and the device address of the management device 101, and then the generated initial data is transmitted by the IR communication unit 11. The device address indicates an address for uniquely identifying a device in the home network 100. The providing unit 13 further records the password in the recording unit 17.

The authentication unit 14 controls an authentication operation. The authentication operation is performed in a challenge-and-response method. More specifically, the authentication is performed in the following manner. The authentication unit 14 generates a common key (hereinafter referred to as an authentication key) using the device address and the password recorded in the recording unit 17, and holds the key. The authentication unit 14 generates a random number as challenge data and has the RF communication unit 12 transmit the generated random number when the RF communication unit 12 receives an access request from the air-conditioner 104. When the RF communication unit 12 receives response data from the air-conditioner 104, validity of the response data is tested using the challenge data and the authentication key.

The encryption/decryption unit 15 encrypts or decrypts data that is transmitted to and received from each node in the home network 100. Specifically, the encryption/decryption unit 15 has the RF communication unit 12 transmit a random number, generates a common key (hereinafter referred to as an encryption key) using the generated random number and the authentication key, encrypts data to be transmitted through the low-power radio communication, and decrypts data that is received.

The controlling unit 16 controls the registration of devices to the home network 100 and communications between nodes in the home network 100.

The recording unit 17 is an area on the EEPROM and stores the password generated by the providing unit 13.

The above explained is the structure of the management device 101.

The air-conditioner 104 includes an IR communication module 4, an RF communication module 5, a microcomputer system 6, and air-conditioner hardware 7, and structured by connecting these components via bus.

The IR communication module 4, RF communication module 5, and microcomputer system 6 have the same hardware structure as the IR communication module 1, RF communication module 2, and microcomputer system 3 in the management device 101.

The air-conditioner hardware 7 is hardware that functions as an air-conditioner, and is controlled by the microcomputer system 6.

An IR communication unit 18, an RF communication unit 19, an obtaining unit 20, an authentication unit 21, an encryption/decryption unit 22, a controlling unit 23, and recording unit 24 are functional blocks that are realized by the program and hardware resources working together in the microcomputer system 6.

The IR communication unit 18 and RF communication unit 19 realize the same functions as the IR communication unit 11 and RF communication unit 12 in the microcomputer system 3 of the management device 101.

When the IR communication unit 18 receives the initial data, the obtaining unit 20 records the device address of the management device 101 and a password that are contained in the received initial data in the recording unit 24. The obtaining unit 20 also has the IR communication unit 18 transmit information indicating the reception of the initial data (hereinafter referred to as reception acknowledgement) after the initial data is recorded in the recording unit 24.

The authentication unit 21 controls an authentication operation. Specifically, the authentication is performed in the following manner. The authentication unit 21, when the controlling unit 23 instructs to perform the authentication with the management device 101, has the RF communication unit 19 transmit an access request to the management device 101 that is identified by the device address recorded in the recording unit 24. When the RF communication unit 19 receives the challenge data from the management device in response to the access request, the authentication unit 21 generates the same authentication key as the authentication key held by the management device 101, using the password and the device address that are recorded in the recording unit 24, then generates response data from the authentication key and the challenge data, and transmits the generated response data to the management device 101.

The encryption/decryption unit 22 encrypts or decrypts data that is transmitted to the management device 101 in the home network 100. Specifically, the encryption/decryption unit 22 generates the same encryption key as the encryption key held by the management device 101 using the generated random number and the authentication key, encrypts data to be transmitted through the low-power radio communication, and decrypts data that is received.

The controlling unit 23 controls the communication with the other nodes on the home network 100 via the management device 101, and has the air-conditioner hardware 7 operate according to operational states of the other devices as nodes.

The recording unit 24 is an area on the EEPROM and stores the password and device address that are obtained by the obtaining unit 20.

The above explained is the structure of the air-conditioner 104.

The bidirectional infrared remote control 105 includes an IR communication module 8, and a microcomputer system 9, and structured by connecting these components via bus.

The IR communication module 8 has the same hardware structure as the IR communication module 1 in the management device 101.

The microcomputer system 9 is a computer system made of a CPU, a ROM, a RAM, and a Ferroelectric Random Access Memory (FeRAM). The bidirectionalinfrared remote control 105 realizes its function by the CPU reading a program stored in the ROM, and by the program and hardware resources working together.

An IR communication unit 25, an obtaining unit 26, a transmission unit 27, an erasing unit 28, and a holding unit 29 are functional blocks that are realized by the program and hardware resources working together in the microcomputer system 9.

The IR communication unit 25 realizes the same function as the IR communication unit 11 in the microcomputer system 3 of the management device 101.

The obtaining unit 26 has the IR communication unit 25 transmit a request for initial data when the registration button on the bidirectional infrared remote control 105 is pressed, and records the received initial data in the holding unit 29 when the IR communication unit 25 receives the initial data.

The transmission unit 27 reads the initial data held in the holding unit 29 when the transmission button on the bidirectional infrared remote control 105 is pressed, and has the IR communication unit 25 transmit the initial data. Further, the transmission unit 27 instructs the erasing unit 28 to erase the initial data after the transmission of the initial data when the reception acknowledgement from the air-conditioner 104 is received.

The erasing unit 28 erases the initial data that is recorded in the holding unit 29, in response to the instruction to erase the initial data from the transmission unit 27.

The holding unit 29 is an area on the FeRAM, and holds the initial data obtained by the obtaining unit 26.

The above explained are the structures of devices according to the present embodiment.

### 3. Communication Sequence

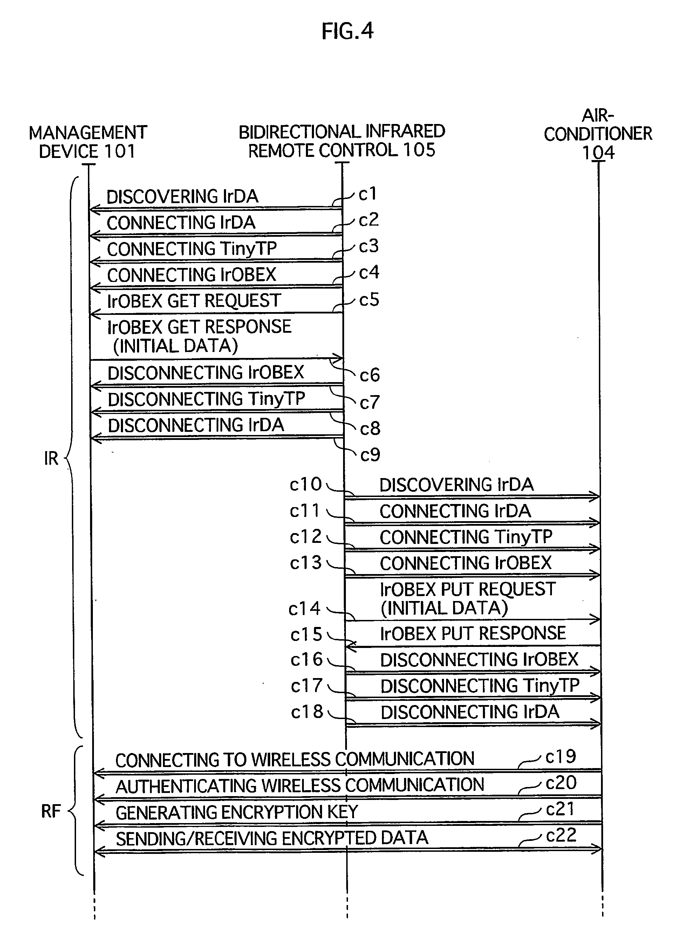

Next, a communication sequence when the air-conditioner 104 is registered to the home network 100 is explained in reference to FIG. 4 . FIG. 4 illustrates the sequence of communication between the management device 101, air-conditioner 104, and bidirectional infrared remote control 105.

In the present embodiment, the communication in registering the air-conditioner 104 to the home network 100 is performed roughly in three phases, (1) between the management device 101 and the bidirectional infrared remote control 105, (2) between the bidirectional infrared remote control 105 and air-conditioner 104, and (3) between the air-conditioner 104 and management device 101. 3-1 Communication between Management Device 101 and Bidirectional Infrared Remote Control 105

First, the bidirectional infrared remote control 105 establishes an IrDA infrared communication channel with the management device 101 by communications indicated by c1 and c2. Next, links using protocols TinyTP and IrOBEX are established by communications indicated by c3 and c4. The TinyTP is a flow control protocol set forth in IrDA, and the IrOBEX is a protocol that realizes an exchange of object data.

After this, the bidirectional infrared remote control 105 transmits a get request, as a request for the initial data, for requesting the object data set forth by the IrOBEX protocol to the management device 101 by means of communication of c5. Upon reception of the get request, the management device 101 transmits the object data by communication indicated by c6 in response. The object data transmitted here is the initial data.

Obtaining the initial data, the bidirectional infrared remote control 105 disconnect the connections via the IrOBEX, TinyTP, and infrared communication channel by communication indicated by c7, c8, and c9, and terminates the communication with the management device 101.

The communication between the management device 101 and bidirectional infrared remote control 105 explained above is performed through the infrared communication, whose distance and direction within which the communication is possible is restricted. Therefore, the communication in this phase is maintained highly confidential.

### 3-2 Communication between Bidirectional Infrared Remote Control 105 and Air-Conditioner 104

The next phase of the communication is performed between the bidirectional infrared remote control 105 and the air-conditioner 104.

The bidirectional infrared remote control 105 establishes an IrDA infrared communication channel and links using protocols TinyTP and IrOBEX by communications indicated by c10-c13 with the air-conditioner 104.

After establishing the communication channels, the bidirectional infrared remote control 105 transmits a put request set forth by the IrOBEX protocol to the air-conditioner 104 by communication indicated by c14. The object data transmitted as the put request is the initial data. Upon reception of the initial data, the air-conditioner 104 transmits a put response as a reception acknowledgement to the bidirectional infrared remote control 105 by communication indicated by c15 in response.

After confirming the exchange of the object data by the put response, the bidirectional infrared remote control 105 disconnects the infrared communication channel, IrOBEX, and TinyTP by communications indicated by c16, c17, and c18, and terminates the communication with the air-conditioner 104.

The communication between the bidirectional infrared remote control 105 and air-conditioner 104 explained above is performed through the infrared communication as in the case of the communication between the management device 101 and bidirectional infrared remote control 105. Therefore, the communication in this phase is also maintained highly confidential.

### 3-1 Communication between Air-Conditioner 104 and Management Device 101

The last phase of the communication is performed between the air-conditioner 104 and management device 101.

First, by communication indicated by c19, the air-conditioner 104 establishes a communication channel of the low-power radio communication with the management device 101, using the device address contained in the initial data. After establishing the communication channel, the air-conditioner 104 and management device 101 performs a challenge and response mutual authentication by communication indicated by c20. Then, after mutually authenticated, a random number generated by one of the air-conditioner 104 and management device 101 is transmitted to the other by communication indicated by c21, and the shared encryption key is generated using the generated and transmitted random number. After sharing the encryption key, the management device 101 notifies the air-conditioner 104, by communication indicated by c22, of information, such as addresses, of other nodes registered to the home network 100 after encrypting using the encryption key. By this, the air-conditioner 104 is able to communicate with other nodes via the management device 101.

The communication between the air-conditioner 104 and management device 101 explained above is performed through the low-power radio communication that realizes the home network 100. Although data transmission in the low-power radio communication is performed using non-directional radiowaves radiated by both the air-conditioner 104 and management device 101, the authentication key that is used in the c19 and c20 is exchanged using the infrared communication, and the data transmitted after the authentication is encrypted. Therefore, it is possible to prevent a leakage of information.

### 4. Conclusion

As explained above, in the present embodiment, the initial data is not transmitted using the low-power radio communication without encrypted. Therefore the information leakage is prevented even if a third party intercepts the communication in the home network 100. Further, the user is able to have the air-conditioner 104 hold the initial data with a very simple operation of pressing a button on the bidirectional infrared remote control 105 directed toward the management device 101, and then pressing another button on the bidirectional infrared remote control 105 directed toward the air-conditioner 104.

Note that, even though the IrDA standard infrared communication, in which infrared light is used as a carrier, is used in transmitting the initial data in the present embodiment, it is also possible to use a different type of communication method that uses a different carrier whose communication range is narrower and secrecy level is higher than those of carriers in the low-power radio communication. For example, an infrared communication method that is compliant with other standards than the IrDA may be adopted.

Moreover, it is also possible to use devices having a function of IC card reader/writer for the management device and communication devices, and the intermediate device may be any of a contactless close-coupled card, a contactless proximity card, and a contactless vicinity card. In this case, the user is able to have the both the management device and communication device hold the shared initial data with a very simple and easy operation. Specifically, the user has the IC card as the intermediate device obtain the initial data by bringing the IC card in a range within which it is possible to communicate with the reader/writer of the management device, and then transmit the initial data from the IC card to the communication device by bringing the IC card in a range within which it is possible to communicate with the reader/writer of the communication device. The close-coupled, proximity, and vicinity cards are categories classified based on a distance within which the communication is possible. It is possible to wirelessly communicate at a distance of 3 mm or less with the contactless close-coupled card, 20 cm or less with the contactless proximity card, and 100 cm or less with the contactless vicinity card.

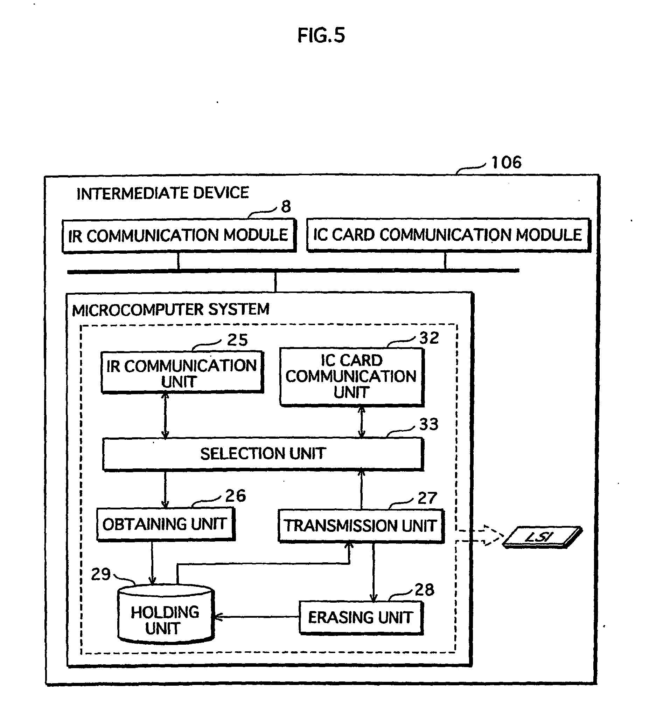

Furthermore, in a case in which a communication device having the IC card reader/writer in place of the IrDA infrared communication function as above is registered to the home network 100 of the present embodiment, it is possible to utilize the present invention by using an intermediate device as shown in FIG.5. An intermediate device 106 has a function such that the IR communication unit and an IC card communication unit 32 try to establish a connection with a target device and a selection unit 33 selects the unit that has established the connection, and then the initial data is sent and received using the selected connection. Specifically, the user has the intermediate device 106 obtain the initial data by operating buttons on the intermediate device 106 with a light emitting/sensitive unit facing the management device 101, and then brings the intermediate device 106 at the distance within which the communication with the reader/writer of the communication device is possible so that the initial data may be transmitted from the intermediate device 106 to the communication device.

Further, the intermediate device may include more than 3 communication modules, and one of the communication modules is selected according to the communication module that the management device or communication device includes.

In addition, the intermediate device may also be a cellular telephone, a personal digital assistant (PDA), or a laptop PC with an infrared communication function other than bidirectional infrared remote control.

Further, in the present embodiment, the initial data contains the password and the device address of the management device. However, it is also possible that the initial data does not contain the device address of the management device. By this, a size of the initial data may be reduced, and thus a necessary capacity in the holding unit in the intermediate device. In this case, the communication device may be authenticated by the management device by trying to discover a device with which the communication in the low-power radio communication is possible, and attempting the mutual authentication with the discovered device with which the communication is possible.

Additionally, the initial data may contain the common key, in place of the password. By this, the management device and communication device do not have to generate the key from the password, and thus the load of each device may be reduced. This modified example is effective in a case in which a low-price device without a high information processing performance is registered to a home network.

Further, in the present embodiment, different keys are used as the authentication key and the encryption key. However, it is also possible to use the same key both in the authentication and encrypting/decrypting the data for transmission.

Moreover, in the present embodiment, the management device 101 transmits the initial data in response to the request for the initial data received from the bidirectional infrared remote control 105. However, it is possible that the management device 101 does not include the infrared sensitive unit and includes a button instead in order to transmit the initial data from the management device 101 based on an operation of the button. In such a structure, the management device 101 does not have to stay on hold waiting for the request for the initial data, and it is possible to reduce the power consumption and simplify the hardware.

In addition, it is also possible to skip the reception acknowledgement of the initial data transmitted between the communication device and the intermediate device. In this case, it is not necessary to dispose an infrared light emitting unit to the IR communication module of the communication device such as the air-conditioner 104, and thus it becomes possible to simplify the hardware of the communication device.

Further, in the present embodiment, the bidirectional infrared remote control 105 erases the initial data in the holding unit 29 after confirming the reception of the initial data by the air-conditioner 104. However; the erase of the initial data may be performed at a different point, if it is possible to avoid holding the initial data in the bidirectional infrared remote control 105 for an extended length of time. For example, the initial data in the holding unit 29 may be erased when a predetermined length of time passes after the initial data is obtained or transmitted. Also, it is also possible that the initial data is erased upon transmission of the initial data from the bidirectional infrared remote control 105. In this case, it is possible that the initial data read out for transmission is held temporary in the RAM, and when the reception acknowledgement is not received in a predetermined length of time, the initial data is transmitted again, or re-record the initial data to the holding unit 29. In addition, it is also possible to erase the initial data by a destructive read, using the characteristics of the FeRAM, when reading the initial data from the holding unit 29 that is on the recording area on the FeRAM.

### [Second Embodiment]

In the first embodiment, the intermediate device is used in order to transfer the initial data between the management device and the communication device. In a second embodiment, a recording medium is used in order to transfer the initial data.

### 1. Practical Use

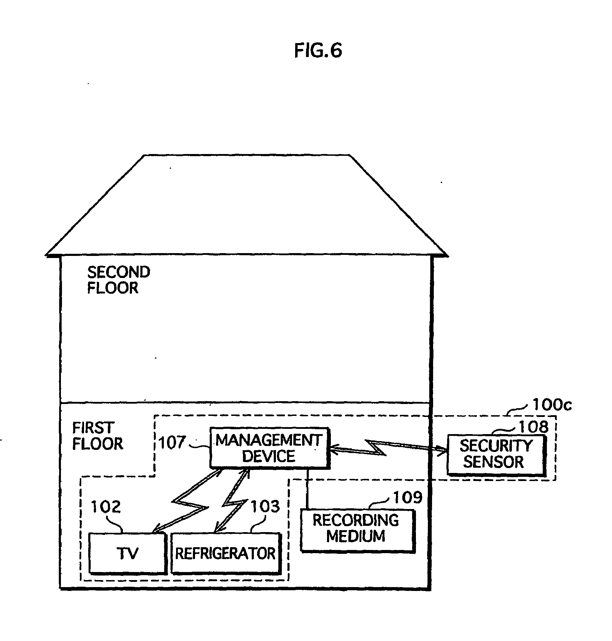

First, the second embodiment is explained in reference to an example in which a security sensor 108 is registered to a home network 100c. FIG.6 illustrates a use of the registration system according to the second embodiment. In order to register the security sensor 108 to a home network 100c, it is necessary that the same common key is held by both a management device 107 and the security sensor 108 and that a mutual authentication is performed using the common key, as in the registration of the air-conditioner 104 to the home network 100a in the first embodiment.

However, the security sensor 108 is different from the air-conditioner 104 in the first embodiment in that the security sensor 108 is buttery driven and does not include an infrared communication function in order to reduce power consumption and size. Therefore, in the present embodiment, initial data containing a password held by the security sensor 108 and a device address of the security sensor 108 are recorded in a recording medium 109, and the management device 107 reads the recording medium 109 so that the management device 107 and the security sensor 108 share the common key and mutually authenticate.

The home network 100c before the security sensor 108 is registered has substantially the same structure as the home network 100a in the first embodiment, but different in that the home network 100c includes the management device 107 instead of the management device 101 in the home network 100a.

The management device 107 is a device similar to the management device 101, but has a function to read the recording media in place of the infrared communication function of the management device 101.

The security sensor 108, disposed on an upper part of an outside wall of a house, has a function to detect an object that approaches the house, and a low-power radiowave communication function. When the security sensor 108 detects an object approaching to the house, the security sensor 108 is able to notify of detection information through the low-power radiowave communication. By registering the security sensor 108 having the above functions to the home network 100c, it is possible to warn the user by having the TV 102 display the detection information.

The recording medium 109 is a flexible disc that comes with the security sensor 108. Initial data containing a password set to the security sensor 108 and a device address of the security sensor 108 is recorded in a recording area of the recording medium 109.

In order to register the security sensor 108 to the home network 100c, each device is operated in the following manner. First, the security sensor 108 is turned on, and the security sensor 108 enters a wait state, waiting for a connection through the low-power radiowave communication. Next, the user inserts the recording medium 109 into a slot of the management device 107, and has the management device 107 read the initial data of the security sensor 108. Then, the management device 107 performs a mutual authentication with the security sensor using the password and device address contained in the initial data, and the security sensor is registered as a node in the home network 100c as shown by FIG.6.

### 2. Structures of Devices

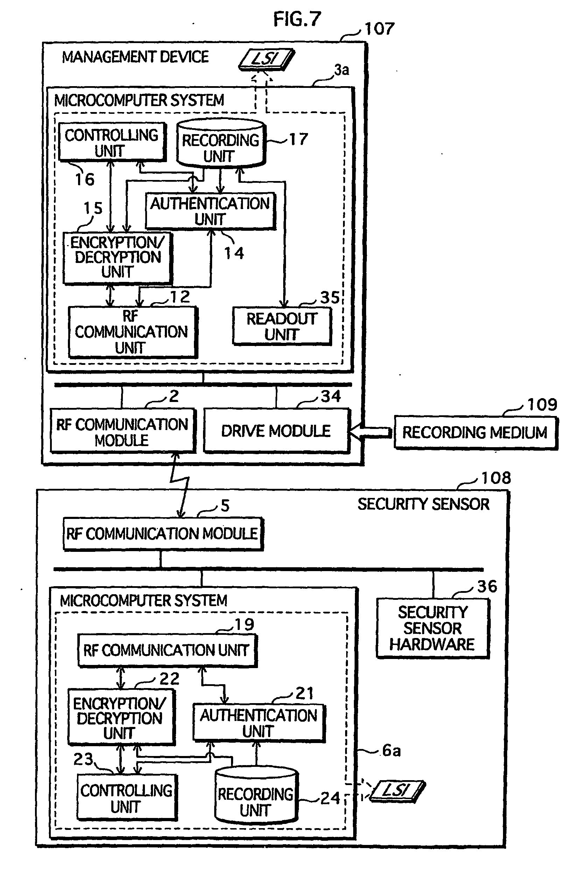

The following explains structures of devices according to the present embodiment. FIG.7 illustrates a constitution of each device according to the second embodiment. The structures that are the same as in FIG. 2 have the same reference numbers as shown in FIG.2, and therefore not explained here.

The management device 107 has a structure substantially the same as the management device 101 of in the first embodiment, except that the management device 107 includes a drive module 34 instead of the IR communication module 1.

The drive module 34 is a reading device for a flexible disc.

Further, a ROM of a microcomputer system 3a stores a different program from the program of the first embodiment.

A functional structure that is realized by the program and hardware resources working together in the microcomputer system 3a is substantially the same as the functional structure of the case of the first embodiment, other than that the functional structure of the microcomputer system 3a does not include the IR communication unit 11 and providing unit 13, and includes a readout unit 35 instead.

The readout unit 35 controls a readout operation of the initial data. The readout operation of the initial data is such that, when the recording medium 109 is inserted in the drive module 34, the initial data recorded in the recording medium 109 is read out and recorded in the recording unit 17.

The security sensor 108 has a similar structure to the air-conditioner 101 other than that the security sensor 108 has security sensor hardware 36 instead of the air-conditioner hardware 7, and that the security sensor 108 does not include the IR communication module 4.

The security sensor hardware 36 is hardware that functions as a sensor, and is controlled by the microcomputer system 6a.

Further, the ROM of the microcomputer system 6a stores a program different from the program in the air-conditioner 104 in the first embodiment.

A functional structure that is realized by the program and hardware resources working together in the microcomputer system 6a is different from the functional structure of the case of the first embodiment in that the functional structure of the microcomputer system 6a does not include the IR communication unit 18 and obtaining unit 20.

In addition, a unique password to the security sensor 108 and a device address of the security sensor 108 are recorded in the recording unit 24.

### 3. Communication Sequence

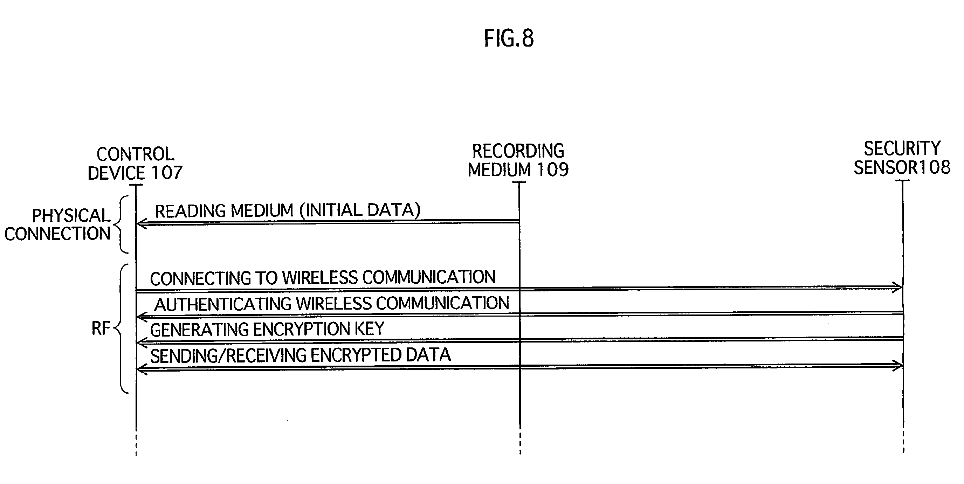

Next, a sequence of data exchange between devices when the security sensor 108 is registered to the home network 100c is explained. FIG.8 illustrates the sequence of the data exchange between the devices in the second embodiment.

The data exchange between the devices in the present embodiment is performed roughly in two phases, (1) the management device 107 reading the recording medium 109, and (2) communication between the management device 107 and security sensor 108.

The management device reads the recording medium 109 by a physical connection between the management device 107 and recording medium 109. Therefore, it is possible to prevent a leakage of read out information and maintain a high secrecy level.

The communication between the management device 101 and security sensor 108 is performed in the same manner as the communication between the management device 101 and air-conditioner 104 in the first embodiment.

### 4. Conclusion

As explained above, in the present embodiment, the management device 107 holds the initial data the initial data transferred from the recording medium so as to have. Therefore, the information leakage is prevented even if the third party snoops the communication in the home network 100c. Further, the user is able to have the management device 107 hold the initial data simply by inserting the recording medium 109 into the management device 107.

Note that, although the flexible disc is used as the recording medium in the present embodiment, characteristics of the present invention do not depend on physical properties of the flexible disc. Any recording medium that the management device is able to read the initial data may be used. Examples of such a recording medium include a magnetic tape, an optical disc, a magnetic optical disc, a magnetic recording disc, a semiconductor memory card, and a removable hard disk drive. Moreover, a sheet of paper or a resin card on which the initial data is recorded in a format that can be scanned optically, such as a barcode, may be used.

Further, in the present embodiment, the initial data recorded in the recording medium that is sold along with the security sensor 108 is provided to the user. However, the initial data may be provided to the user in a different form.

For example, the initial data may be provided, when the security sensor 108 is purchased, to the user by writing the initial data to a recording medium that the user brought to a shop that sells the security sensor 108.

### [Other Modified Examples]

Although the present invention is explained based on the embodiments as described in the above, the present invention is not restricted to the above embodiments. Various modifications as shown below are also included in the present invention.
1. The present invention may also be a method as explained in the embodiments. The present invention may also be a computer program that is realized by the method executed by a computer, and may also be digital signals made of the computer programs.
   Further, the present invention may also be a computer readable storage medium, such as a flexible disc, a hard disk, a CD-ROM, an MO, a DVD, a DVD-ROM, a DVD-RAM, a BD (Blue-ray Disc), and a semiconductor memory, that stores the program or the digital signals.
   In addition, the present invention can also be the computer program or the digital signals that are transmitted via a telecommunication line, a wireless connection, a cable communication line, and the network represented by the Internet, a data and audio broadcast, and the like.
   Moreover, the present invention may also be such that the computer program or the digital signals that are transmitted to an independent computer system, via the storage medium that stores the computer program or the digital signals, or via the network, so as to be executed in the independent computer system.
2. The present invention may also be put into practice as an LSI that controls one of the management device, communication device, and intermediate device. Such an LSI may be realized by integrating a part or all of the functional blocks that are enclosed by dashed lines in the microcomputer systems illustrated in FIGS.2, 5, and 7. Those functional blocks may be separately made into a chip, or made into one chip to include all of the functional blocks.
   Such a circuit is called LSI here, but names such as IC, system LSI, super LSI, and ultra LSI are also used depending on the degree of integration.
   A method of integration of circuits is not restricted to LSI, and it is possible to use a dedicated circuit or a general-purpose processor. It is also possible to use a Field Programmable Gate Array (FPGA) or a reconfigurable processor that enables to reconfigure connections and settings of circuit cells in a LSI.
   Moreover, when a new integrated circuit technology that replaces LSI as a result of improvement of the semiconductor technology or a new technology derived from the semiconductor technology, such a new technology may be adopted to integrate the functional blocks. There is a possibility of application of biotechnology to such a new technology.
3. Examples of low-power radio communications for realizing the home network in the first and the second embodiments include such as IEEE802.11 wireless LAN, Bluetooth (R), and ECHONET.
4. In the first and the second embodiments, the home network is a star-topology network. However, the present invention may also be adapted to networks with different topologies, such as a bus-topology and a ring-topology networks.
5. In the first and the second embodiments, a management device of an exclusive use is provided to the home network. However, any of the household electrical devices may also serve as a management device.
6. In the first and the second embodiments, the data transmitted in the home network is encrypted. However, the encryption is not always necessary if the transmitted data does not have any secrecy. It is possible to reduce processing loads of each device by using the common key only in the authentication and not encrypting the transmitted data, while the registration of the device to the home network is restricted to the devices that are officially authenticated. By this, it is possible to structure a home network using cost effective devices without a high information processing capability.
7. It is also possible to combine any of the first embodiment, second embodiment, and modifications.

### Industrial Applicability

An example of uses of the present invention is household electrical devices that are utilized as communication devices that perform wireless data communication in a home network.

## Claims

1. An intermediate device that relays a piece of initial data from a management device (101) on a wireless network to a communication device (104), the piece of initial data being used to register the communication device (104) to the wireless network, the intermediate device (106) **characterized by** comprising:
a receiving unit (26) operable to receive the piece of initial data from the management device (101);
a holding unit (29) operable to hold the piece of initial data; and
a sending unit (27) operable to send the piece of initial data to the communication device,
**characterised in that**
the receiving of the piece of initial data performed by the receiving unit (26) and the sending of the piece of initial data performed by the sending unit (27) are performed using a carrier that reaches a narrower area than an area where a carrier used for the wireless communication reaches, and
the receiving unit (26) is adapted to receive the piece of initial data at a first location (105a), from which the carrier used for the receiving of the piece of initial data performed by the receiving unit (26) reaches the management device (101); and
the sending unit (27) is adapted to send the piece of initial data at a second location (105b), from which the carrier used for the sending of the piece of initial data performed by the sending unit (27) reaches the communication device (104), the sending of the piece of initial data by the sending unit (27) being performed after moving the intermediate device (106) to the second location (105b).

2. The intermediate device according to claim 1, wherein:
different carriers are used in the receiving and the sending of the piece of initial data.

3. The intermediate device according to claim 1, further comprising:
an erase unit (28) operable to erase the piece of initial data held in the holding unit (29).

4. The intermediate device according to claim 3, wherein:
the erase of the piece of initial data is performed when the piece of sent initial data is received by the communication device (104).

5. The intermediate device according to claim 4, wherein:
the erase unit (28) is adapted to confirm, by receiving a notification from the communication device (104), that the piece of initial data is received by the communication device (104).

6. The intermediate device according to claim 3, wherein:
the holding unit (29) is a Ferroelectric Random Access Memory; and
the erasing of the piece of initial data is performed by destructive read of the piece of initial data.

7. A communication device registration method for relaying, by an intermediate device, a piece of initial data from a management device (101) on a wireless network to a communication device (104), the piece of initial data being used to register the communication device (104) to the wireless network, the communication device registration method being **characterized by** comprising:
a receiving step of receiving, by the intermediate device, the piece of initial data from the management device (101);
a holding step of holding, by the intermediate device (106), the piece of initial data; and
a sending step of sending the piece of initial data from the intermediate device to the communication device (104), wherein:
the receiving of the piece of initial data performed in the receiving step and the sending of the piece of initial data performed in the sending step are performed using a carrier that reaches a narrower area than an area where a carrier used for the wireless communication reaches, and
in the receiving step, the piece of initial data is received at a first location (105a), from which the carrier used for the receiving of the piece of initial data performed in the receiving step reaches the management device (101); and
in the sending step, the piece of initial data is sent at a second location (105b), from which the carrier used for the sending of the piece of initial data performed in the sending step reaches the communication device (104), the sending of the piece of initial data in the sending step being performed after moving the intermediate device (106) to the second location (105b).

## Patentansprüche

1. Zwischenvorrichtung, die ein Anfangs-Datenelement von einer Verwaltungsvorrichtung (101) auf einem Drahtlos-Netzwerk zu einer Kommunikationsvorrichtung (104) weiterleitet, wobei das Anfangs-Datenelement dazu dient, die Kommunikationsvorrichtung (104) bei dem Drahtlos-Netzwerk zu registrieren, und die Zwischenvorrichtung (106) **dadurch gekennzeichnet ist, dass** sie umfasst:
eine Empfangseinheit (26), die so betrieben werden kann, dass sie das Anfangs-Datenelement von der Verwaltungsvorrichtung (101) empfängt;
eine Halteeinheit (29), die so betrieben werden kann, dass sie das Anfangs-Datenelement hält; und
eine Sendeeinheit (27), die so betrieben werden kann, dass sie das Anfangs-Datenelement zu der Kommunikationsvorrichtung sendet,
**dadurch gekennzeichnet, dass**
das durch die Empfangseinrichtung (26) durchgeführte Empfangen des Anfangs-Datenelementes und das durch die Sendeeinheit (27) durchgeführte Senden des Anfangs-Datenelementes unter Verwendung eines Trägers durchgeführt werden, der einen engeren Bereich als einen Bereich erreicht, den ein für die Drahtlos-Kommunikation verwendeter Träger erreicht, und
die Empfangseinheit (26) so eingerichtet ist, dass sie das Anfangs-Datenelement an einem ersten Standort (105a) empfängt, von dem aus der Träger, der für das durch die Empfangseinheit (26) durchgeführte Empfangen des Anfangs-Datenelementes verwendet wird, die Verwaltungsvorrichtung (101) erreicht; und
die Sendeeinheit (27) so eingerichtet ist, dass sie das Anfangs-Datenelement an einem zweiten Standort (105b) sendet, von dem aus der Träger, der für das durch die Sendeeinheit (27) durchgeführte Senden des Anfangs-Datenelementes verwendet wird, die Kommunikationsvorrichtung (104) erreicht, wobei das Senden des Anfangs-Datenelementes durch die Sendeeinheit (27) nach Bewegen der Zwischenvorrichtung (106) an den zweiten Standort (105b) durchgeführt wird.

2. Zwischenvorrichtung nach Anspruch 1, wobei
verschiedene Träger beim Empfangen und Senden des Anfangs-Datenelementes verwendet werden.

3. Zwischenvorrichtung nach Anspruch 1, die des Weiteren umfasst:
eine Löscheinheit (28), die so betrieben werden kann, dass sie das von der Halteeinheit (29) gehaltene Anfangs-Datenelement löscht.

4. Zwischenvorrichtung nach Anspruch 3, wobei
das Löschen des Anfangs-Datenelementes durchgeführt wird, wenn das gesendete Anfangs-Datenelement durch die Kommunikationsvorrichtung (104) empfangen worden ist.

5. Zwischenvorrichtung nach Anspruch 4, wobei:
die Löscheinheit (28) so eingerichtet ist, dass sie, indem sie eine Benachrichtigung von der Kommunikationsvorrichtung (104) empfängt, bestätigt, dass das Anfangs-Datenelement durch die Kommunikationsvorrichtung (104) empfangen worden ist.

6. Zwischenvorrichtung nach Anspruch 3, wobei
die Halteeinheit (29) ein FRAM (Ferroelectric Random Access Memory) ist; und
das Löschen des Anfangs-Datenelementes durch zerstörendes Lesens des Anfangs-Datenelementes durchgeführt wird.

7. Verfahren zum Registrieren einer Kommunikationsvorrichtung, mit dem durch eine Zwischenvorrichtung ein Anfangs-Datenelement von einer Verwaltungsvorrichtung (101) auf einem Drahtlos-Netzwerk zu einer Kommunikationsvorrichtung (104) weitergeleitet wird, wobei das Anfangs-Datenelement dazu dient, die Kommunikationsvorrichtung (104) bei dem Drahtlos-Netzwerk zu registrieren, und das Verfahren zum Registrieren der Kommunikationsvorrichtung **dadurch gekennzeichnet ist, dass** es umfasst:
einen Empfangsschritt des Empfangens des Anfangs-Datenelementes von der Verwaltungsvorrichtung (101) durch die Zwischenvorrichtung;
einen Halteschritt des Haltens des Anfangs-Datenelementes durch die Zwischenvorrichtung (106); und
einen Sendeschritt des Sendens des Anfangs-Datenelementes von der Zwischenvorrichtung zu der Kommunikationsvorrichtung (104),
wobei
das Empfangen des Anfangs-Datenelementes, das in dem Empfangsschritt durchgeführt wird, und das Senden des Anfangs-Datenelementes, das in dem Sendeschritt durchgeführt wird, unter Verwendung eines Trägers durchgeführt werden, der einen engeren Bereich als einen Bereich erreicht, den ein für die Drahtlos-Kommunikation verwendeter Träger erreicht; und
in dem Empfangsschritt das Anfangs-Datenelement an einem ersten Standort (105a) empfangen wird, von dem aus der Träger, der für das in dem Empfangsschritt durchgeführte Empfangen des Anfangs-Datenelementes verwendet wird, die Verwaltungsvorrichtung (101) erreicht; und
in dem Sendeschritt das Anfangs-Datenelement an einem zweiten Standort (105b) gesendet wird, von dem aus der Träger, der für das in dem Sendeschritt durchgeführte Senden des Anfangs-Datenelementes verwendet wird, die Kommunikationsvorrichtung (104) erreicht, wobei das Senden des Anfangs-Datenelementes in dem Sendeschritt nach Bewegen der Zwischenvorrichtung (106) an den zweiten Standort (105b) durchgeführt wird.

## Revendications

1. Dispositif intermédiaire qui relaie un élément de données initiales d'un dispositif (101) de gestion sur un réseau sans fil à un dispositif (104) de communication, l'élément de données initiales étant utilisé pour faire enregistrer le dispositif (104) de communication au le réseau sans fil, le dispositif intermédiaire (106) étant **caractérisé en ce qu'**il comprend:
une unité (26) de réception pouvant fonctionner pour recevoir l'élément de données initiales du dispositif (101) de gestion ;
une unité (29) de maintien pouvant fonctionner pour maintenir l'élément de données initiales ; et
une unité (27) d'émission pouvant fonctionner pour adresser l'élément de données initiales au dispositif de communication,
**caractérisé en ce que**
la réception de l'élément de données initiales exécutée par l'unité (26) de réception et l'émission de l'élément de données initiales exécutée par l'unité (27) d'émission sont exécutées au moyen d'une porteuse qui atteint une surface plus étroite qu'une surface où parvient une porteuse utilisée pour la communication sans fil, et
l'unité (26) de réception est adaptée à recevoir l'élément de données initiales en un premier emplacement (105a), à partir duquel la porteuse utilisée pour la réception de l'élément de données initiales exécutée par l'unité (26) de réception atteint le dispositif (101) de gestion ; et l'unité (27) d'émission est adaptée à émettre l'élément de données initiales en un deuxième emplacement (105b), à partir duquel la porteuse utilisée pour l'émission de l'élément de données initiales exécutée par l'unité (27) d'émission atteint le dispositif (104) de communication, l'émission de l'élément de données initiales par l'unité (27) d'émission étant exécutée après déplacement du dispositif intermédiaire (106) jusqu'au deuxième emplacement (105b).

2. Dispositif intermédiaire selon la revendication 1, dans lequel:
des porteuses différentes sont utilisées dans la réception et l'émission de l'élément de données initiales.

3. Dispositif intermédiaire selon la revendication 1, comprenant en outre :
une unité (28) d'effacement pouvant fonctionner pour effacer l'élément de données initiales maintenu dans l'unité (29) de maintien.

4. Dispositif intermédiaire selon la revendication 3, dans lequel:
l'effacement de l'élément de données initiales est exécuté quand l'élément de données initiales émises est reçu par le dispositif (104) de communication.

5. Dispositif intermédiaire selon la revendication 4, dans lequel:
l'unité (28) d'effacement est adaptée à confirmer, en recevant une notification de la part du dispositif (104) de communication, de ce que l'élément de données initiales est reçu par le dispositif (104) de communication.

6. Dispositif intermédiaire selon la revendication 3, dans lequel:
l'unité (29) de maintien est une mémoire vive ferroélectrique ; et
l'effacement de l'élément de données initiales est exécuté par une lecture destructive de l'élément de données initiales.

7. Procédé d'enregistrement de dispositif de communication destiné à relayer, au moyen d'un dispositif intermédiaire, un élément de données initiales d'un dispositif (101) de gestion sur un réseau sans fil à un dispositif (104) de communication, l'élément de données initiales étant utilisé pour faire enregistrer le dispositif (104) de communication au réseau sans fil, le procédé d'enregistrement de dispositif de communication étant **caractérisé en ce qu'**il comprend :
une étape de réception, consistant à faire recevoir, par le dispositif intermédiaire (106), l'élément de données initiales depuis le dispositif (101) de gestion ;
une étape de maintien, consistant à faire maintenir par le dispositif intermédiaire (106), l'élément de données initiales ; et
une étape d'émission consistant à faire émettre, par le dispositif intermédiaire (106), l'élément de données initiales au dispositif (104) de communication, dans lequel :
la réception de l'élément de données initiales exécutée dans l'étape de réception et l'émission de l'élément de données initiales exécutée dans l'étape d'émission sont exécutées au moyen d'une porteuse qui atteint une surface plus étroite qu'une surface où parvient une porteuse utilisée pour la communication sans fil, et
dans l'étape de réception, l'élément de données initiales est reçu en un premier emplacement (105a), à partir duquel la porteuse utilisée pour la réception de l'élément de données initiales exécutée dans l'étape de réception atteint le dispositif (101) de gestion ; et
dans l'étape d'émission, l'élément de données initiales est adressé à un deuxième emplacement (105b), à partir duquel la porteuse utilisée pour l'émission de l'élément de données initiales exécutée dans l'étape d'émission atteint le dispositif (104) de communication, l'émission de l'élément de données initiales dans l'étape d'émission étant exécutée après déplacement du dispositif intermédiaire (106) jusqu'au deuxième emplacement (105b).
